# FASCICULE DE BREVET EUROPEEN

(11) **EP 4 040 755 B1**
(45) Date de publication et mention de la délivrance du brevet: **04.06.2025**
(21) Numéro de dépôt: 21305173.3
(22) Date de dépôt: 09.02.2021
(51) Int. Cl.: H04L 67/125, H04L 67/562, H04L 67/025

(54) **MUTUALISATION DE RESSOURCES ENTRE DES OBJETS IOT CONNECTÉS FORMANT UN RÉSEAU LOCAL**
GEMEINSAME NUTZUNG VON RESSOURCEN ZWISCHEN VERBUNDENEN IOT-OBJEKTEN, DIE EIN LOKALES NETZWERK BILDEN
RESOURCE SHARING BETWEEN CONNECTED IOT OBJECTS FORMING A LOCAL NETWORK

(43) Date de publication de la demande: 10.08.2022
(73) Titulaire: Bull SAS, 78340 Les Clayes-sous-Bois (FR)
(72) Inventeur: DEMEILLIEZ, Bruno, 38380 SAINT LAURENT DU PONT (FR); CHAABANE, Wajih, 73000 CHAMBERY (FR); AIELLO, Damien, 38500 LA BUISSE (FR)
(74) Mandataire: IPAZ

(56) Documents cités:
- WO-A1-2007/018407
- CN-B- 106 789 947
- GOLAM KAYAS ET AL: "VSDM: A Virtual Service Device Management Scheme for UPnP-Based IoT Networks", ARXIV.ORG, CORNELL UNIVERSITY LIBRARY, 201 OLIN LIBRARY CORNELL UNIVERSITY ITHACA, NY 14853, 5 November 2020 (2020-11-05), XP081796580
- CHII CHANG ET AL: "SPiCa", MOBILE AND UBIQUITOUS MULTIMEDIA, ACM, 2 PENN PLAZA, SUITE 701 NEW YORK NY 10121-0701 USA, 25 November 2014 (2014-11-25), pages 30 - 39, XP058061892, ISBN: 978-1-4503-3304-7, DOI: 10.1145/2677972.2677979

## Description

La présente invention concerne un procédé de mutualisation de ressources entre des objets connectés formant un réseau local. Elle concerne également un système mettant en œuvre un tel procédé.

Le domaine de l'invention est le domaine de l'Internet des Objets (IoT), et en particulier la gestion des ressources et des fonctionnalités dans le domaine de l'IoT.

### État de la technique

L'Internet des objets, ou Internet Of Things (IoT), est défini comme étant le réseau local formé par une pluralité d'objets, appelés objets connectés, qui sont interconnectés entre eux.

L'IoT est un domaine en pleine expansion et ses domaines d'application sont de plus en plus variés : smart city, gestion intelligente d'une maison, monitoring d'installations, voitures autonomes, etc...

Les objets connectés peuvent communiquer au travers de sous-réseaux locaux, ces derniers pouvant être interconnectés entre eux grâce, par exemple, à l'Internet. Ainsi, les objets connectés peuvent communiquer entre eux dans le réseau local, et le réseau local peut communiquer avec d'autres réseaux locaux d'objets connectés, au travers d'Internet. Les objets connectés se trouvant au sein d'un réseau local peuvent être très variés et peuvent être prévus pour mettre en œuvre des fonctions très différentes. Ainsi, les objets connectés au sein d'un réseau local peuvent par exemple comprendre des détecteurs de fumées, des appareils électroménagers, des serrures, des volets, etc. Chacun de ces objets est dédié à la réalisation d'au moins fonction pour laquelle il est conçu.

Actuellement, les ressources informatiques de chaque objet connecté sont dimensionnées en considérant cet objet de manière individuelle et indépendante des autres objets connectés, que ce soit en terme de ressources de calcul, de ressources de stockage, ou encore en termes de fonctionnalités. Cette conception de l'objet connecté peut rendre chaque ledit objet connecté onéreux et complexe, à concevoir et à fabriquer.

Le document « VSDM: A Virtual Service Device Management Scheme for UPnP-Based IoT Networks », ARXIV.ORG, CORNELL UNIVERSITY LIBRARY, 201 OLIN LIBRARY CORNELL UNIVERSITY ITHACA, NY 14853, publié le 5 novembre 2020, les auteurs étant GOLAM KAYAS ET AL., divulgue une approche fondée sur une délégation qui étend le protocole UPnP en déchargeant l'annonce de service et le surdébit lié à une découverte depuis des dispositifs IoT à ressources limitées vers les voisins riches en ressources d'un réseau IoT activé par UPnP.

Un but de la présente invention est de remédier à cet inconvénient.

Un autre but de la présente invention est de proposer une solution permettant de diminuer le coût de fabrication d'un objet connecté.

Un autre but de la présente invention est de proposer une solution permettant de diminuer la complexité d'un objet connecté.

### Exposé de l'invention

- L'invention permet d'atteindre au moins l'un de ces buts par un procédé de mutualisation de ressources entre objets connectés, interconnectés entre eux, et formant un réseau local, ledit procédé étant défini par la revendication 1.

Ainsi, le procédé selon l'invention permet à au moins un objet connecté se trouvant dans un réseau local de déléguer au moins une opération de traitement de données à au moins un autre objet connecté se trouvant au sein du même réseau, au travers d'une unité de gestion se trouvant également au sein dudit réseau local et connectée à chacun des objets connectés dudit réseau local. Cette solution de délégation d'opérations de traitement de données au sein d'un réseau local formé par une pluralité d'objets connectés permet à chacun desdits objets d'une part de partager ses propres ressources avec d'autres objets connectés faisant partie dudit réseau local, et d'avoir accès aux ressources des autres objets connectés au sein dudit réseau local.

Le partage de ressources entre les objets connectés formant un réseau local permet de ne pas avoir à équiper chaque objet connecté de toutes les ressources lui permettant réaliser toutes les tâches pour lesquelles il est prévu, ce qui permet de diminuer les ressources qui équipent ledit objet considéré individuellement, et par voie de conséquence de diminuer le coût et la complexité de chaque objet connecté. Autrement dit, la présente invention permet de considérer et de dimensionner les ressources informatiques de chaque objet connecté, non plus uniquement de manière individuelle pour, mais de manière globale au sein du réseau local dans lequel ledit objet connecté se trouve.

Il est à noter que, selon la présente invention, les ressources sont partagées au sein du réseau local formé par les objets connectés qui sont interconnectés entre eux, sans sortir dudit réseau local. Ainsi, la partage des ressources ne nécessite pas de connexion à Internet mais uniquement une connexion à l'unité de gestion se trouvant au sein du réseau local. Autrement dit, le partage des ressources se fait localement.

L'unité de gestion permet de faire la liaison entre les objets connectés d'un réseau local pour l'utilisation partagée de ressources disponibles au sein dudit réseau local, au niveau de chaque objet connecté, de sorte que les ressources d'un objet connecté peuvent être utilisées pour les besoins d'un autre objet connecté.

Dans la présente invention, au moins une ressource qui peut être mutualisée peut être une ressource de calcul, telle qu'un processeur, une ressource de mémorisation, telle qu'une mémoire, une ressource de communication, telle qu'une interface de communication filaire ou non, au moins une ressource de mesure d'un paramètre tel qu'un capteur de température ou de pression, etc.

Dans le procédé tel que défini par la revendication 1, pour au moins une requête de délégation, l'unité de gestion identifie l'objet connecté délégataire pouvant réaliser l'opération déléguée et communiquer son identité à l'objet délégant. Dans ce cas, l'objet délégant peut communiquer directement avec l'objet délégataire et lui transmettre toutes les données pour la réalisation de l'opération déléguée, sans nécessairement passer par l'unité de gestion.

Alternativement ou en plus, pour au moins une requête de délégation, l'unité de gestion peut identifier l'objet délégataire pouvant réaliser ladite opération déléguée et communiquer audit objet délégataire toutes les données pour la réalisation de l'opération déléguée.

En outre, dans le procédé tel que défini par la revendication 1, pour une opération déléguée, l'identification de l'objet délégataire parmi tous les objets connectés est réalisée en fonction d'au moins un des paramètres suivants :
- les ressources nécessaires pour réaliser ladite opération déléguée, et
- la disponibilité de chaque objet connecté.

Lorsque l'unité de gestion identifie un objet connecté qui d'une part dispose de ressources nécessaires pour réaliser l'opération déléguée et d'autre part présente une disponibilité pour la réaliser, alors elle peut choisir cet objet connecté comme objet délégataire.

Au moins une requête délégation d'une opération déléguée peut comprendre au moins une adresse URL de chargement :
- d'un programme, et/ou
- d'un environnement, et/ou
- de données,
à utiliser pour réaliser ladite opération déléguée.

Ainsi, il n'est pas nécessaire d'inclure ces éléments dans la requête de délégation, de sorte que la requête de délégation peut être construite et émise en consommant peu de ressources en termes de communication. L'objet délégataire, ou l'unité de gestion, peut alors charger, et éventuellement mémoriser, le programme, l'environnement et/ou les données, pour réaliser l'opération déléguée.

L'adresse URL peut être celle d'un emplacement au sein de l'objet connecté délégant, ou une adresse URL d'un emplacement au sein de l'unité de gestion lorsque ce dernier fait l'intermédiaire entre l'objet délégant et l'objet délégataire, ou encore une adresse URL d'un emplacement au sein d'un autre dispositif local ou distant.

Alternativement ou en plus, au moins une requête de délégation peut comprendre un programme, et/ou environnement, et/ou des données, à utiliser pour réaliser l'opération à déléguée. Dans ce cas, tous les éléments nécessaires à la réalisation de l'opération déléguée sont immédiatement disponibles pour l'unité de gestion et/ou pour l'objet délégataire. Au moins un de ces éléments peut être mémorisé au niveau de l'unité de gestion qui les transmet à l'objet délégataire, et/ou au niveau de l'objet délégataire.

Le programme peut être tout programme à exécuter ou à installer pour réaliser l'opération de traitement de données.

L'environnement peut être tout environnement informatique pour réaliser l'opération de traitement de données, tel que par exemple une machine virtuelle par exemple.

Au moins une requête délégation d'une opération déléguée peut comprendre d'autre données relatives à l'opération à réaliser, telles que par exemple au moins une donnée relative à :
- une périodicité de réalisation de ladite opération déléguée,
- une heure de réalisation de l'opération déléguée,
- une condition externe pour la réalisation de l'opération déléguée, tel
que par exemple une condition de température, de luminosité, etc.

Le procédé selon l'invention peut comprendre, pour au moins une opération déléguée, une fourniture par l'objet délégataire, d'au moins une donnée relative à un résultat de ladite opération déléguée, après réalisation de ladite opération déléguée.

Pour au moins une opération déléguée, l'au moins une donnée relative au résultat peut comprendre directement les données représentant le résultat.

Pour au moins une opération déléguée, l'au moins une donnée relative au résultat peut comprendre une adresse URL depuis laquelle les données représentant le résultat peuvent être chargées. L'adresse URL peut être l'adresse d'un emplacement au sein de l'objet délégataire. L'adresse URL peut être celle d'un emplacement au sein de l'unité de gestion ou encore au sein d'un autre appareil se trouvant dans le réseau local : dans ce cas les données représentant les résultats sont préalablement communiques à ladite unité de gestion ou audit autre appareil pour y être mémorisées.

Pour au moins une opération déléguée, l'objet connecté délégataire peut fournir ladite au moins une donnée relative au résultat directement à l'objet connecté délégant, à savoir :
- soit directement les données représentant le résultat,
- soit une adresse URL de chargement desdites données représentant le résultat ;
sans passer par l'unité de gestion.

Pour au moins une opération déléguée, l'objet connecté délégataire peut fournir ladite au moins une donnée relative au résultat à l'unité de gestion. Dans ce cas, c'est l'unité de gestion qui communique à l'objet délégant ladite au moins une donnée relative résultat, à savoir :
- soit directement les données représentant le résultat,
- soit une adresse URL de chargement desdites données représentant le résultat.

Le procédé tel que défini par la revendication 1 comprend, pour au moins un, en particulier chaque, objet connecté, une détermination d'un planning de disponibilité dudit objet connecté pour la réalisation d'au moins une opération déléguée par un autre objet connecté.

La disponibilité d'au moins un objet connecté peut être déterminé par l'objet connecté lui-même et communiquée à l'unité de gestion.

Alternativement, ou en plus, la disponibilité d'au moins objet connecté peut être déterminée par l'unité de gestion. Dans ce cas, le planning de disponibilité peut être déterminé en fonction de données envoyées par l'objet connecté à l'unité de gestion, par exemple des données relatives à la nature, et éventuellement à la quantité, des ressources qu'il consomme dans le temps. Alternativement, le planning de disponibilité peut être déterminé par exécution au niveau de l'objet connecté d'une application surveillant le fonctionnement dudit objet connecté, en particulier en termes de nature, et éventuellement de quantité, de ressources consommées dans le temps. Une telle application peut être déployée dans le, ou chaque, objet connecté par l'unité de gestion.

Suivant une caractéristique avantageuse, le procédé selon l'invention peut comprendre, au sein de l'unité de gestion, un ordonnancement d'opérations déléguées, en fonction d'au moins une règle prédéterminée.

L'ordonnancement peut être un ordonnancement réalisé selon une règle temporelle, tel que par exemple un ordonnancement de type FIFO (pour « First In First Out ») de sorte que les opérations déléguées sont réalisées dans l'ordre temporel dans lequel elles ont été sollicitées.

L'ordonnancement peut être réalisé suivant une règle prenant en compte l'ensemble des objets connectés de sorte qu'une opération déléguée par l'un des objets connectés est réalisée avant une autre opération déléguée par un autre des objets connectés.

L'ordonnancement peut être réalisée suivant une règle prenant en compte chaque objet connecté individuellement. Ainsi, une opération déléguée à cet un délégataire peut être réalisée avant une autre opération déléguée à un autre objet délégataire même si elle a été reçue après.

De manière nullement limitative, au moins une opération de traitement de données peut comprendre, ou consister en :
- une exécution d'une fonction identifiée ;
- une exécution d'un programme ou d'un logiciel ;
- un stockage de données ; et/ou
- une communication de données vers un dispositif local ou distant.

Suivant un autre aspect de la présente invention, il est proposé un système de mutualisation de ressources entre des objets connectés, comprenant :
- plusieurs objets connectés, interconnectés entre eux, et formant un réseau local, et
- une unité de gestion, connectée à chacun desdits objets connectés au sein dudit réseau local ;
configurés pour mettre en œuvre toutes les étapes du procédé tel que défini par la revendication 1.

Suivant un mode de réalisation, l'unité de gestion peut être installée dans, ou peut être formée par, un appareil dédié se trouvant au sein du réseau local. Dans ce cas, cet appareil n'est pas prévu pour réaliser une autre fonction ou tâche, par opposition aux objets connectés se trouvant dans le réseau.

Alternativement, l'unité de gestion peut être installée dans un objet connecté se trouvant dans le réseau local, et prévu et conçu pour réaliser au moins une autre tâche, de manière similaire aux objets connectés se trouvant dans le réseau local.

Avantageusement, au moins un objet connecté peut comporter un module logiciel pour déterminer un planning de disponibilité dudit objet connecté pour exécuter une opération déléguée.

Un tel module de gestion peut être configuré pour surveiller la nature et/ou la quantité de ressources consommées au sein dudit objet connecté pour la réalisation des tâches pour lesquelles ledit objet connecté est prévu. Ainsi, il est possible de déterminer les périodes pendant lesquelles les ressources dudit objet connecté ne sont pas utilisées, ou sont peu utilisées, par ledit objet connecté et sont donc disponibles pour réaliser des opérations pour le compte d'autres objets connectés.

Pour au moins un objet connecté, un tel module logiciel peut être natif.

Pour au moins un objet connecté, un tel module peut être déployé dans ledit objet connecté ultérieurement, par exemple par l'unité de gestion.

En particulier, le système selon l'invention peut comprendre :
- au sein de chaque objet connecté, un module individuel de détermination de la disponibilité dudit objet connecté, et en particulier la disponibilité des ressources équipant ledit objet connecté et
- au sein de l'unité de gestion, un module central en communication avec chacun desdits modules individuels ;
de sorte à déterminer un planning de disponibilité de tous les objets connectés.

Un objet connecté au sens de la présente invention peut être tout objet connecté.

Par exemple les objets connectés peuvent être des objets connectés présents dans une habitation tel qu'une alarme, une centrale de contrôle de volets roulant, un appareil électroménager, formant un réseau local au sein de ladite habitation.

Suivant un autre exemple, les objets connectés peuvent être des objets connectés présents dans un lieu de travail .

Suivant un autre aspect de la présente invention, il est proposé un dispositif de gestion de ressources entre des objets connectés, tel que défini par la revendication 9..

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'un procédé de mutualisation de ressources entre des objets connectés selon l'invention ;
- la FIGURE 2 est une représentation schématique d'un exemple de réalisation non limitatif d'un système de mutualisation de ressources entre des objets connectés selon l'invention ;
- la FIGURE 3 est une représentation schématique d'un autre exemple de réalisation non limitatif d'un système de mutualisation de ressources entre des objets connectés selon l'invention ; et
- la FIGURE 4 est une représentation schématique d'un exemple de réalisation non limitatif de partage de ressources entre des objets connectés, selon l'invention

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs figures conservent la même référence.

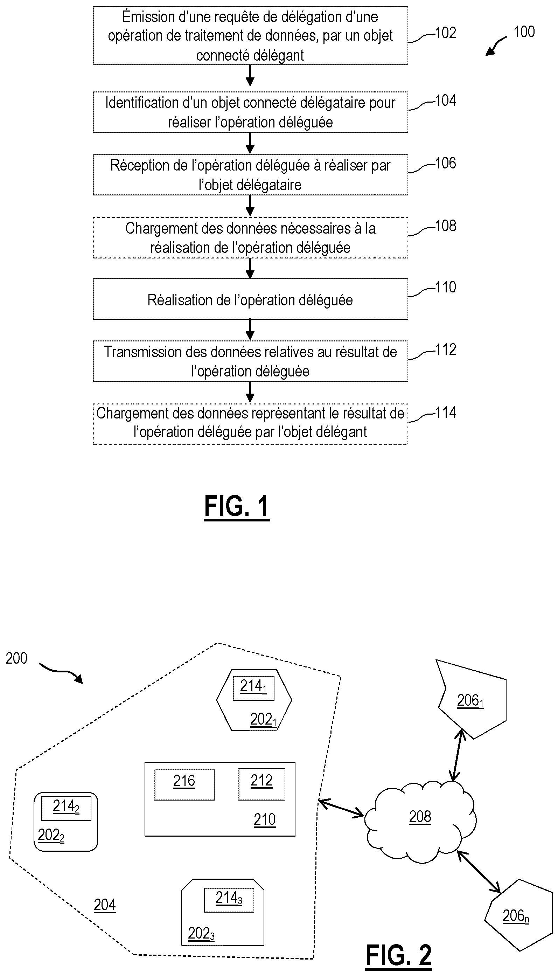

La FIGURE 1 est une représentation schématique d'un exemple de réalisation non limitatif d'un procédé de mutualisation de ressources entre des objets connectés formant un réseau local.

Le procédé 100, représenté sur la FIGURE 1, peut être utilisée pour mutualiser les ressources dans un réseau local comprenant au moins deux objets connectés.

Les ressources mises en commun peuvent être des ressources de calcul, des ressources de mémorisation, des ressources de communication, des ressources de mesure ou de captation d'une grandeur physique, etc.

Le procédé 100 comprend une étape 102 lors de laquelle, un objet connecté, dit objet délégant, émet une requête pour déléguer une opération de traitement de données, dite opération déléguée. Une opération déléguée peut être une opération de calcul, une opération de traitement de données, une opération de mémorisation, une opération de communication de données vers un appareil distant ou local, etc.

La requête est émise vers une unité de gestion en communication avec tous les objets connectés au sein du réseau local.

La requête peut comprendre toutes les données pour réaliser l'opération déléguée. Alternativement, la requête peut comprendre une URL indiquant l'emplacement de données à charger pour réaliser l'opération déléguée, au sein de l'objet délégant, ou au sein de l'unité de gestion ou encore au sein d'un autre appareil local ou distant. Les données pour réaliser l'opération peuvent comprendre :
- un programme à exécuter,
- un environnement pour réaliser une opération, telle qu'une machine virtuelle présentant des règles de sécurité spécifiques,
- des données concernées par l'opération déléguée,
- une périodicité de réalisation de l'opération déléguée, le cas échéant.
- etc.

Suite à la réception de la requête de délégation, l'unité de gestion détermine un autre objet connecté dans le réseau local et pouvant réaliser l'opération déléguée, lors d'une étape 104.

Pour ce faire, suivant un mode de réalisation, l'unité de gestion consulte une liste dans laquelle est inscrite, pour chaque objet, un planning de la disponibilité dudit chaque objet connecté ainsi que les ressources disponibles au niveau dudit objet connecté. Alternativement, l'unité centrale peut requérir auprès de chaque objet connecté de lui fournir ce planning.

Lorsqu'aucun objet connecté ne peut réaliser cette opération car aucun objet connecté ne dispose des ressources nécessaires pour la réaliser, la requête de délégation est refusée ou mise en attente jusqu'à ce qu'un objet connecté soit disponible.

Lorsqu'il existe un objet connecté qui dispose des ressources pour réaliser cette opération et que le planning de disponibilité de cet objet connecté permet de réaliser, alors ledit objet est sélectionné comme objet connecté délégataire pour réaliser cette opération déléguée. Si besoin, l'opération déléguée est inscrite sur une liste d'attente des opérations à réaliser pour cet objet connecté.

Lors d'une étape 106, l'objet connecté délégataire reçoit la requête pour réaliser l'opération déléguée.

Suivant un exemple de réalisation, la requête est reçue en provenance de l'unité de gestion. Suivant un autre exemple de réalisation, la requête est reçue en provenance de l'objet délégant, sans passer par l'unité de gestion. Dans ce dernier cas, l'unité de gestion a préalablement communiqué l'identifiant dudit objet délégataire à l'objet connecté délégant.

La requête reçue par l'objet délégataire peut être identique à la requête de délégation émise par l'objet délégant. Alternativement, la requête reçue par l'objet délégataire peut être différente de la requête de délégation émise par l'objet délégant. Dans ce dernier cas, l'objet délégant et l'objet délégataire ne communiquent pas entre eux.

Comme indiqué plus haut, la requête reçue par l'objet délégataire peut comprendre les données pour réaliser l'opération ou une adresse URL pour télécharger ces données depuis l'objet délégant ou l'unité de gestion, ou un autre appareil. Dans ce dernier cas, l'unité de gestion reçoit préalablement les données de l'opération et les mémorise à l'emplacement dont l'adresse URL est envoyée à l'objet délégataire.

Lorsque la requête reçue par l'objet délégataire comprend une adresse URL, le procédé 100 comprend une étape 108, optionnelle, de téléchargement, par l'objet délégataire, des données nécessaires à la réalisation de l'opération déléguée.

Lorsque l'objet connecté délégataire dispose de toutes les données, il réalise l'opération déléguée en utilisant ses propres ressources, lors d'une étape 110.

Lorsque l'opération déléguée a été réalisée par l'objet connecté délégataire, celui-ci met transmet les données relatives au résultat, lors d'une étape 112.

Suivant un exemple de réalisation, l'objet délégant reçoit directement les données de résultat depuis l'objet délégataire ou l'unité de gestion.

Suivant un autre exemple de réalisation, l'objet délégant reçoit une adresse URL d'un emplacement où se trouvent les données de résultat et permettant à l'objet connecté délégant de télécharger ces données. L'adresse URL peut être l'adresse d'un emplacement au sein de l'objet délégataire, ou au sein de l'unité de gestion. Dans ce dernier cas, l'unité de gestion reçoit préalablement les données de résultat et les mémorise à l'emplacement dont l'adresse URL est envoyée à l'objet délégant.

Lorsque, l'objet délégant reçoit une adresse URL pour télécharger les données de résultat, le procédé 100 comprend une étape 114, optionnelle, de téléchargement, par l'objet délégant, des données de résultat.

Lorsque l'opération déléguée doit être réitérée à plusieurs reprises dans le temps suivant une périodicité donnée, les étapes 110-114 sont répétées pour chaque itération de l'opération déléguée.

Lorsque l'unité de gestion reçoit plusieurs opérations à déléguer de la part d'un ou plusieurs objets connectés, les étapes du procédé 100 peuvent être répétées pour chaque opération individuellement.

De plus, lorsque plusieurs opérations déléguées sont à réaliser au sein du réseau local d'objets connectés, alors l'unité de gestion peut ordonnancer ces opérations déléguées, selon au moins une règle prédéfinie, en particulier individuellement pour chaque objet délégataire. Les opérations déléguées peuvent par exemple être ordonnancées dans un ordre temporel en fonction du moment de réception de chaque requête de délégation.

En outre, la réalisation d'au moins une opération déléguée peut être déléguée à plusieurs objets connectés, chaque objet réalisant une partie de l'opération. Dans ce cas, l'unité de gestion peut être configurée pour séparer ladite opération en plusieurs sous-opérations réalisées par différents objets connectés délégataires et réunir les résultats obtenus par chaque objet connectés pour ensuite les fournir à l'objet délégant. Dans ce cas, les sous-opérations peuvent être réalisées simultanément ou à tour de rôle.

La FIGURE 2 est une représentation schématique d'un exemple de réalisation non limitatif d'un système de mutualisation de ressources entre des objets connectés formant un réseau local.

Le système 200, représenté sur la FIGURE 2, peut être utilisé pour la mise en œuvre d'un procédé de mutualisation de ressources au sein d'un réseau local d'objets connectés, en particulier le procédé 100 de la FIGURE 1.

Dans l'exemple représenté, le système 200 comprend au total trois objets connectés 202₁, 202₂, 202₃, également désignés par la référence 202ᵢ ou 202 dans la suite. Bien entendu, le nombre d'objets connectés n'est pas limité 3 et peut être supérieur ou égal à 2.

Les objets connectés 202 forment un réseau local 204 et sont interconnectés entre eux. Autrement dit, chaque objet connecté 202ᵢ est en communication avec chacun des autres objets connectés 202ᵢ.

Chaque objet connecté réalise une ou plusieurs tâches pour lesquelles il est conçu. Dans l'exemple décrit les objets connectés 202ᵢ sont des objets connectés se trouvant au sein d'une habitation, tel qu'une alarme, un appareil électroménager, etc. et forment un réseau local 204 au sein de ladite habitation.

Le réseau local 204 peut être connecté à un ou plusieurs autres réseaux 206₁-206ₙ, locaux ou non, par exemple au travers d'un réseau de communication 208 tel que le réseau Internet.

Le système 200 selon l'invention comprend en outre une unité de gestion 210, en communication avec chacun des objets connectés 202₁-202₃. Cette unité de gestion est configurée pour :
- recevoir, de la part d'au moins un des objets connectés 202₁-202₃, dit délégant, une requête de délégation de la réalisation d'une opération de traitement de données, dite opération déléguée ;
- identifier au moins des objets connectés 202₁-202₃, dit délégataire, pour réaliser ladite opération déléguée ; et
- attribuer la réalisation de ladite opération déléguée audit objet délégataire.

L'unité de gestion 210 peut en outre être configurée pour établir un planning de disponibilité de chaque objet connecté 202ᵢ pour réaliser des opérations déléguées. Pour ce faire, l'unité de gestion 210 peut comprendre un module central de planning 212, en particulier logiciel, et déployer dans chaque objet connecté 202₁-202₃ un module logiciel de planning client, respectivement 214₁-214₃. Chaque module de planning client 214ᵢ équipant un objet connecté 202ᵢ a pour fonction de surveiller l'utilisation des ressources dont est doté ledit objet connecté 202ᵢ et renseigner le module de planning central 212 de sorte que ledit module central de planning 212 peut établir un planning de disponibilité de chaque ressource au sein de chaque objet connecté.

Suivant une alternative, pour au moins un objet connecté 202ᵢ, le module de planning client 214ᵢ peut être un module présent dans ledit objet connecté 202ᵢ de sorte qu'il n'est pas déployé par l'unité de gestion.

L'unité de gestion 210 peut en outre être configurée pour réaliser un ordonnancement des opérations déléguées, lorsqu'elle reçoit plusieurs requêtes de la part des objets connectés 202. Pour ce faire, l'unité de gestion peut comprendre un module d'ordonnancement 216, en particulier logiciel.

L'unité de gestion 210 peut en outre comprendre :
- des moyens de mémorisation (non représentés),
- une interface de communication (non représentée), filaire ou sans, avec chaque objet connecté 202ᵢ ;
- une interface de communication (non représentée), filaire ou sans fil, avec un autre réseau, tel que le réseau Internet 208,
- etc.

De manière générale, l'unité de gestion 210 peut être configurée pour réaliser toutes les opérations décrites plus haut en référence à l'unité de gestion.

Dans l'exemple représenté sur la FIGURE 2, l'unité de gestion 210 est intégrée dans un appareil dédié, indépendant des objets connectés, et ne réalisant aucune autre tâche.

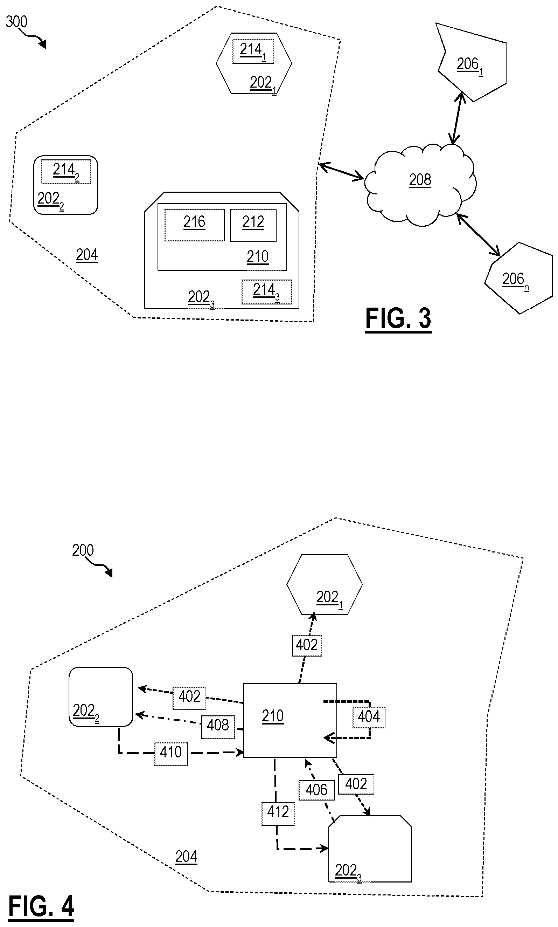

La FIGURE 3 est une représentation schématique d'un autre exemple de réalisation non limitatif d'un système de mutualisation de ressources entre des objets connectés formant un réseau local.

Le système 300, représenté sur la FIGURE 3, peut être utilisé pour la mise en œuvre d'un procédé de mutualisation de ressources au sein d'un réseau local d'objets connectés, en particulier le procédé 100 de la FIGURE 1.

Le système 300 comprend tous les éléments du système 200 de la FIGURE 2, sauf en ce qui concerne les différences indiquées ci-dessous.

Dans le système 300 de la FIGURE 3, l'unité de gestion 210 est intégrée dans l'objet connecté 202₃.

Suivant encore une autre alternative, l'unité de gestion peut être intégrée dans un autre appareil tel que par exemple un point d'accès à Internet, un switch, etc.

La FIGURE 4 est une représentation schématique d'un exemple de réalisation non limitatif de partage de ressources entre des objets connectés, selon l'invention.

L'exemple donné sur la FIGURE 4 se déroule dans le système 200 de la FIGURE 2.

Dans l'exemple décrit, l'unité de gestion 210 déploie dans chaque objet connecté 202₁-202₃ un module de planning client lui permettant d'établir la disponibilité des ressources au sein de chaque objet connecté. Ce déploiement est signalé par les flèches 402.

Ensuite, l'unité de gestion 210 construit un planning de disponibilité, qu'elle tient à jour en fonction des données retournées par les modules de planning client. Cette construction est signalée par la flèche 404.

L'objet connecté 202₃ émet une requête pour déléguer la réalisation d'une opération vers un autre objet connecté. Cette requête de délégation est signalée par la flèche 406.

En fonction des disponibilités et des ressources des autres objets connectés 202₁ et 202₂, l'unité de gestion 210 identifie que l'objet connecté 202₂ peut réaliser cette opération. L'unité de gestion 210 confie alors l'opération déléguée à l'objet connecté 202₂. Cette opération est signalée par la flèche 408. La disponibilité de l'objet connecté 202₂ est mise à jour dans l'unité de gestion 210.

L'objet connecté 202₂ réalise l'opération et retourne le résultat de l'opération à l'unité de gestion 210, tel que signalé par la flèche 410.

L'unité de gestion 210 communique le résultat de l'opération à l'objet connecté, tel que montré par la flèche 412.

Bien entendu, l'exemple décrit en FIGURE 4 n'est qu'un exemple de réalisation et n'est en aucun cas limitatif. En particulier, des variantes ont été décrites plus haut, en particulier en ce qui concerne la nature des données échangées, le mécanisme d'échange des données, etc.

De manière générale, l'invention n'est pas limitée aux exemples détaillés ci-dessus en référence aux FIGURES et la portée de la présente invention est donnée par les revendications.

## Revendications

1. Procédé (100) de mutualisation de ressources entre objets connectés (202₁-202₃), interconnectés entre eux et formant un réseau local (204), ledit procédé comprenant au moins une itération des étapes suivantes :
- émission (102), par un desdits objets connectés (202₁-202₃), dit délégant, vers une unité de gestion (210) connectée audits objets connectés (202₁-202₃) au sein dudit réseau local (204), d'une requête de délégation d'une opération de traitement de données, dite opération déléguée ;
- identification, par ladite unité de gestion, d'un autre objet connecté, dit délégataire, pouvant réaliser l'opération déléguée, ladite identification étant réalisée en fonction de paramètres comprenant les ressources nécessaires pour réaliser ladite opération déléguée et la disponibilité de chaque objet connecté, ledit objet délégataire ayant été identifié en tant que disposant de ressources nécessaires pour réaliser l'opération déléguée et en tant que présentant une disponibilité pour la réaliser ; et
- attribution (104), par ladite unité de gestion (210), de la réalisation de ladite opération déléguée audit objet délégataire identifié,
le procédé comprenant, en outre, pour chaque objet connecté (202₁-202₃), une détermination d'un planning de disponibilité dudit objet connecté (202₁-202₃) pour la réalisation d'au moins une opération déléguée par un autre objet connecté (202₁-202₃), ledit planning de disponibilité permettant à ladite unité de gestion d'établir la disponibilité des ressources au sein de chaque objet connecté.

2. Procédé (100) selon la revendication précédente, **caractérisé en ce qu'**au moins une requête délégation d'une opération déléguée comprend au moins une adresse URL de chargement :
- d'un programme, et/ou
- d'un environnement, et/ou
- de données ;
à utiliser pour réaliser ladite opération déléguée.

3. Procédé (100) selon l'une quelconque des revendications précédentes, **caractérisé en ce qu'**il comprend, pour au moins une opération déléguée, une fourniture, par ledit objet délégataire (202₁-202₃), d'au moins une donnée relative un résultat de ladite opération déléguée, après réalisation de ladite opération déléguée.

4. Procédé (100) selon l'une quelconque des revendications précédentes, **caractérisé en ce qu'**il comprend, au sein de l'unité de gestion (210), un ordonnancement d'opérations déléguées, en fonction d'au moins une règle prédéterminée.

5. Procédé (100) selon l'une quelconque des revendications précédentes, **caractérisé en ce qu'**au moins une opération de traitement de données comprend, ou consiste en :
- une exécution d'une fonction identifiée ;
- une exécution d'un programme ou d'un logiciel ;
- un stockage de données ;
- une communication de données vers un dispositif local ou distant.

6. Système (200;300) de mutualisation de ressources entre des objets connectés (202₁-202₃), comprenant :
- plusieurs objets connectés (202₁-202₃), interconnectés entre eux, et formant un réseau local (204), et
- une unité de gestion (210), connectée à chacun desdits objets connectés (202₁-202₃), au sein dudit réseau local (204) ;
configurés pour mettre en œuvre toutes les étapes du procédé (100) selon l'une quelconque des revendications précédentes.

7. Système (200;300) selon la revendication précédente, **caractérisé en ce que** l'unité de gestion (210) est installée, ou est formé par, un appareil dédié se trouvant au sein du réseau local (204), ou un objet connecté (202₃)se trouvant dans le réseau local (204) et réalisant au moins une autre tâche.

8. Système (200;300) selon l'une quelconque des revendications 6 ou 7, **caractérisé en ce qu'**au moins un objet connecté (202₁-202₃) comporte un module logiciel (214₁-214₃) pour déterminer un planning de disponibilité dudit objet connecté (202₁-202₃) pour exécuter une opération déléguée.

9. Dispositif (210) de gestion de ressources entre des objets connectés (202₁-202₃), interconnectés entre eux, et formant un réseau local (204), ledit dispositif (210) étant configuré pour réaliser les étapes suivantes :
- recevoir, de la part d'au moins un desdits objets connectés (202₁-202₃), dit objet délégant, une requête de délégation de la réalisation d'une opération de traitement de données, dite opération déléguée ;
- en fonction de paramètres comprenant les ressources nécessaires pour réaliser ladite opération déléguée et la disponibilité de chaque objet connecté, identifier un autre objet connecté, dit délégataire, pouvant réaliser l'opération déléguée, ledit objet délégataire ayant été identifié en tant que disposant de ressources nécessaires pour réaliser l'opération déléguée et en tant que présentant une disponibilité pour la réaliser ; et
- attribuer la réalisation de ladite opération déléguée audit objet délégataire identifié,
le dispositif (210) étant, en outre, configuré de façon à déterminer, pour chaque objet connecté (202₁-202₃), un planning de disponibilité dudit objet connecté (202₁-202₃) pour la réalisation d'au moins une opération déléguée par un autre objet connecté (202₁-202₃), ledit planning de disponibilité permettant audit dispositif de gestion d'établir la disponibilité des ressources au sein de chaque objet connecté.

## Patentansprüche

1. Verfahren (100) zum Bündeln von Ressourcen zwischen verbundenen Objekten (202₁ bis 202₃), die miteinander verbunden sind und ein lokales Netzwerk (204) bilden, wobei das Verfahren mindestens eine Iteration der folgenden Schritte umfasst:
- Übertragung (102), durch eines der verbundenen Objekte (202₁ bis 202₃), den sogenannten Delegator, an eine Verwaltungseinheit (210), die mit den verbundenen Objekten (202₁ bis 202₃) innerhalb des lokalen Netzwerks (204) verbunden ist, einer Anfrage zur Delegation eines Datenverarbeitungsvorgangs, der als delegierter Vorgang bezeichnet wird;
- Identifizierung, durch die Verwaltungseinheit, eines anderen verbundenen Objekts, den sogenannten Delegierten, das in der Lage ist, den delegierten Vorgang durchzuführen, wobei die Identifizierung in Abhängigkeit von Parametern durchgeführt wird, welche die Ressourcen, die zum Durchführen des delegierten Vorgangs erforderlich sind, und die Verfügbarkeit jedes verbundenen Objekts umfassen, wobei das delegierte Objekt über die zum Durchführen des delegierten Vorgangs erforderlichen Ressourcen verfügbar identifiziert wird und für dessen Durchführung verfügbar ist; und
- Zuweisung (104), durch die Verwaltungseinheit (210), der Durchführung des delegierten Vorgangs an das identifizierte delegierte Objekt,
wobei das Verfahren ferner für jedes verbundene Objekt (202₁ bis 202₃) eine Bestimmung eines Verfügbarkeitsplans für das verbundene Objekt (202₁ bis 202₃) zum Durchführen mindestens eines von einem anderen verbundenen Objekt (202₁ bis 202₃) delegierten Vorgangs umfasst, wobei der Verfügbarkeitsplan es der Verwaltungseinheit ermöglicht, die Verfügbarkeit von Ressourcen in jedem verbundenen Objekt herzustellen.

2. Verfahren (100) nach dem vorstehenden Anspruch,
**dadurch gekennzeichnet, dass** mindestens eine Delegationsanforderung für einen delegierten Vorgang mindestens eine URL-Ladeadresse umfasst:
- eines Programms und/oder
- einer Umgebung und/oder
- von Daten;
die zum Durchführen des delegierten Vorgangs verwendet werden soll.

3. Verfahren (100) nach einem der vorstehenden Ansprüche,
**dadurch gekennzeichnet, dass** es für mindestens einen delegierten Vorgang eine Bereitstellung durch das delegierte Objekt (202₁ bis 202₃) von mindestens einem Datenelement umfasst, das sich auf ein Ergebnis des delegierten Vorgangs nach der Durchführung des delegierten Vorgangs bezieht.

4. Verfahren (100) nach einem der vorstehenden Ansprüche,
**dadurch gekennzeichnet, dass** es innerhalb der Verwaltungseinheit (210) eine Planung delegierter Vorgänge in Abhängigkeit von mindestens einer vorbestimmten Regel umfasst.

5. Verfahren (100) nach einem der vorstehenden Ansprüche,
**dadurch gekennzeichnet, dass** mindestens ein Datenverarbeitungsvorgang Folgendes umfasst oder aus Folgendem besteht:
- Ausführen einer identifizierten Funktion;
- Ausführen eines Programms oder einer Software;
- Speichern von Daten;
- Übertragen von Daten an eine lokale oder entfernte Vorrichtung.

6. System (200; 300) zum Bündeln von Ressourcen zwischen verbundenen Objekten (202₁ bis 202₃), umfassend:
- mehrere verbundene Objekte (202₁ bis 202₃), die miteinander verbunden sind und ein lokales Netzwerk (204) bilden, und
- eine Verwaltungseinheit (210), die mit jedem der innerhalb des lokalen Netzwerks (204) verbundenen Objekte (202₁ bis 202₃) verbunden ist;
die konfiguriert sind, um sämtliche der Verfahrensschritte (100) nach einem der vorstehenden Ansprüche auszuführen.

7. System (200; 300) nach dem vorstehenden Anspruch,
**dadurch gekennzeichnet, dass** die Verwaltungseinheit (210) auf einem dedizierten Gerät im lokalen Netzwerk (204) oder einem verbundenen Objekt (202₃), das sich im lokalen Netzwerk (204) befindet und mindestens eine weitere Aufgabe durchführt, installiert ist oder dadurch gebildet wird.

8. System (200; 300) nach einem der Ansprüche 6 oder 7,
**dadurch gekennzeichnet, dass** mindestens ein verbundenes Objekt (202₁ bis 202₃) ein Softwaremodul (214₁ bis 214₃) umfasst, um einen Verfügbarkeitsplan für das verbundene Objekt (202₁ bis 202₃) zu bestimmen, um einen delegierten Vorgang auszuführen.

9. Vorrichtung (210) zum Verwalten von Ressourcen zwischen verbundenen Objekten (202₁ bis 202₃), die miteinander verbunden sind und ein lokales Netzwerk (204) bilden, wobei die Vorrichtung (210) konfiguriert ist, um die folgenden Schritte durchzuführen:
- Empfangen, von mindestens einem der verbundenen Objekte (202₁ bis 202₃), dem sogenannten delegierenden Objekt, einer Anfrage zur Delegation der Durchführung eines Datenverarbeitungsvorgangs, des sogenannten delegierten Vorgangs;
- Identifizieren, in Abhängigkeit von Parametern, welche die Ressourcen umfassen, die zum Durchführen des delegierten Vorgangs und für die Verfügbarkeit jedes verbundenen Objekts erforderlich sind, eines anderen verbundenen Objekts, den sogenannten Delegierten, das in der Lage ist, den delegierten Vorgang durchzuführen, wobei das delegierte Objekt über die zum Durchführen des delegierten Vorgangs erforderlichen Ressourcen verfügbar identifiziert wird und für dessen Durchführung verfügbar ist; und
- Zuweisen der Durchführung des delegierten Vorgangs an das identifizierte delegierte Objekt,
wobei die Vorrichtung (210) ferner so konfiguriert ist, dass sie für jedes verbundene Objekt (202₁ bis 202₃) einen Verfügbarkeitsplan für das verbundene Objekt (202₁ bis 202₃) zum Durchführen mindestens eines von einem anderen verbundenen Objekt (202₁ bis 202₃) delegierten Vorgangs bestimmt, wobei der Verfügbarkeitsplan es der Verwaltungsvorrichtung ermöglicht, die Verfügbarkeit von Ressourcen in jedem verbundenen Objekt herzustellen.

## Claims

1. A method (100) for pooling resources between connected objects (202₁-202₃), interconnected therebetween and forming a local network (204), said method comprising at least one iteration of the following steps:
- transmission (102), by one of said connected objects (202₁-202₃), referred to as a delegator, to a management unit (210) connected to said connected objects (202₁-202₃) within said local network (204), of a request to delegate a data processing operation, referred to as a delegated operation;
- identification, by said management unit, of another connected object, called a delegate object, capable of performing the delegated operation, said identification being carried out based on parameters including the resources required to perform said delegated operation and the availability of each connected object, said delegate object having been identified as having resources required to perform the delegated operation and as having the availability to perform it; and
- allocation (104), by said management unit (210), of the performance of said delegated operation to said identified delegate object,
the method further comprising, for each connected object (202₁-202₃), determining an availability schedule for said connected object (202₁-202₃) for carrying out at least one operation delegated by another connected object (202₁-202₃), said availability schedule enabling said management unit to establish the availability of resources within each connected object.

2. The method (100) according to the preceding claim, **characterized in that** at least one request to delegate a delegated operation comprises at least one URL for loading:
- a program, and/or
- an environment, and/or
- data;
to be used to carry out said delegated operation.

3. The method (100) according to any one of the preceding claims, **characterized in that** it comprises, for at least one delegated operation, the provision, by said delegate object (202₁-202₃), of at least one data item relating to a result of said delegated operation, after completion of said delegated operation.

4. The method (100) according to any one of the preceding claims, **characterized in that** it comprises, within the management unit (210), a sequencing of delegated operations, based on at least one predetermined rule.

5. The method (100) according to any one of the preceding claims, **characterized in that** at least one data processing operation comprises, or consists of:
- executing an identified function;
- executing a program or software;
- storing data;
- communicating data to a local or remote device.

6. A system (200;300) for pooling resources between connected objects (202₁-202₃), comprising:
- several connected objects (202₁-202₃), interconnected with one another, and forming a local network (204), and
- a management unit (210), connected to each of said connected objects (202₁-202₃), within said local network (204);
configured to implement all the steps of the method (100) according to any one of the preceding claims.

7. The system (200; 300) according to the preceding claim, **characterized in that** the management unit (210) is installed in, or is formed by, a dedicated device located within the local network (204), or a connected object (202₃) located in the local network (204) and performing at least one other task.

8. The system (200; 300) according to any one of claims 6 or 7, **characterized in that** at least one connected object (202₁-202₃) comprises a software module (214₁-214₃) for determining an availability schedule of said connected object (202₁-202₃) for executing a delegated operation.

9. A device (210) for managing resources between connected objects (202₁-202₃), interconnected therebetween, and forming a local network (204), said device (210) being configured to perform the following steps:
- receiving, from at least one of said connected objects (202₁-202₃), referred to as a delegating object, a request to delegate the performance of a data processing operation, referred to as the delegated operation;
- based on parameters including the resources required to perform said delegated operation and the availability of each connected object, identifying another connected object, called a delegate object, capable of performing the delegated operation, said delegate object having been identified as having the resources required to perform the delegated operation and having the availability to perform it; and
- allocating the performance of said delegated operation to said identified delegate object,
the device (210) further being configured so as to determine, for each connected object (202₁-202₃), an availability schedule for said connected object (202₁-202₃) for carrying out at least one operation delegated by another connected object (202₁-202₃), said availability schedule enabling said management device to establish the availability of resources within each connected object.
